# EUROPÄISCHE PATENTANMELDUNG

(11) **EP 4 575 237 A1**
(43) Veröffentlichungstag der Anmeldung: **25.06.2025**
(21) Anmeldenummer: 24220414.7
(22) Anmeldetag: 17.12.2024
(51) Int. Cl.: F16B 5/02, B65F 3/02, B65F 9/00, F16B 37/04, F16B 21/09

(54) **FIXIERUNGSSYSTEM**

(30) Priorität: 21.12.2023 DE 102023136262
(71) Anmelder: Zoeller Tech Sp. z.o.o., 84-123 Rekowo Górne (PL)
(72) Erfinder: Kreft, Grzegorz, 84-230 Rumia (PL); Jamrozik, Sebastian, 84-100 Polczyno Bis (PL); Kubiak, Maciej, 84-240 Reda (PL)
(74) Vertreter: Regler, Markus Egid

(57) **Zusammenfassung**

Die Erfindung betrifft ein Fixierungssystem für ein Abfallsammelfahrzeug umfassend zumindest ein Profil (2) und zumindest ein Adapterstück (3,3a,3b,3c,3d), das an oder in dem Profil (2) anordnenbar ist, wobei Profil (2) und Adapterstück (3,3a,3b,3c,3d) dazu eingerichtet sind, um an einem Aufbau (1) eines Abfallsammelfahrzeugs abgeordnet zu werden und die Anbringung eines Anbauteils (11) an dem Aufbau (1) zu ermöglichen, wobei das Profil (2) so ausgebildet ist, dass unterschiedliche auf konkrete Anbauteile (11) abgestimmte Adapterstücke (3,3a,3b,3c,3d) an unterschiedlichen Positionen anordnenbar sind, so dass die Adapterstücke (3,3a,3b,3c,3d) Anbindungspunkte für das Anbauteil (11) bilden.

Weiterhin betrifft die Erfindung ein Abfallsammelfahrzeug mit einem solchen Fixierungssystem sowie ein Verfahren zum Montieren eines Fixierungssystems mit den Schritten:
• Bereitstellen eines Profils (2),
• Einbringen der Fixiermutter (16) in die Einführöffnung,
• Führen des Adapterstücks (3,3a,3b,3c,3d) entlang der Öffnung (7) in eine Endposition,
• Fixieren des Adapterstücks (3,3a,3b,3c,3d), indem die Fixiermutter (16) durch Drehen der Schraube (15) zwischen zwei Wänden des Profils (2) verklemmt wird und indem durch weiteres Drehen der Schraube (15) die Wand des Profils (2) zwischen dem Tragelement (12) und der Fixiermutter (16) eingeklemmt wird,
• Optional Wiederholen der vorstehenden Schritte an einer weiteren Öffnung (7).

## Beschreibung

Die Erfindung betrifft ein Fixierungssystem mit den Merkmalen von Patentanspruch 1, ein Abfallsammelfahrzeug mit einem derartigen Fixierungssystem sowie ein Verfahren zum Montieren eines Fixierungssystems mit den Merkmalen des Patentanspruchs 15.

Abfallsammelfahrzeuge umfassen in der Regel verschiedene Baugruppen, die je nach Bedarf und Ausführung unterschiedlich zusammengestellt werden. Das ist zum einen das Chassis oder der Unterbau, der die Motorisierung und das Fahrerhaus umfasst. Auf dem Chassis wird ein Aufbau angeordnet, der einen Sammelcontainer umfasst, dessen Volumen von den jeweiligen Einsatzanforderungen abhängt. Davon abhängig ist auch die Hub-Kipp- oder Kippvorrichtung, die front- oder heckseitig oder auch seitlich angeordnet wird.

Die endgültige Zusammenstellung hängt also von den jeweiligen Bedarfen ab, so dass bei der Herstellung von Abfallsammelfahrzeugen unterschiedliche Aufbauten mit unterschiedlichen Anbauteilen, also Hub-Kipp- oder Kippvorrichtungen oder Hecktüren, kombiniert werden. Die unterschiedlichen Anbauteile werden auf unterschiedliche Weise an den Aufbauten befestigt, was es erforderlich macht, die Anbindungen individuell herzustellen. Das führt zu erhöhtem Aufwand hinsichtlich Fertigung und Lagerung.

Es ist daher die Aufgabe der vorliegenden Erfindung den Herstellungsprozess diesbezüglich zu verbessern und ein verbessertes Herstellungsverfahren bereitzustellen.

Der gegenständliche Teil der Aufgabe wird gelöst durch ein Fixierungssystem mit den Merkmalen des Patentanspruchs 1 sowie ein Abfallsammelfahrzeug mit den Merkmalen das Patentanspruchs 13. Der verfahrenstechnische Teil der Aufgabe wird gelöst durch ein Verfahren zum Montieren eines Fixierungssystems mit den Merkmalen des Patentanspruchs 15.

Die Erfindung betrifft ein Fixierungssystem für ein Abfallsammelfahrzeug umfassend zumindest ein Profil und zumindest ein Adapterstück, das an oder in dem Profil anordnenbar ist, wobei Profil und Adapterstück dazu eingerichtet sind, um an einem Aufbau eines Abfallsammelfahrzeugs angeordnet zu werden und die Anbringung eines Anbauteils an dem Aufbau zu ermöglichen, wobei das Profil so ausgebildet ist, dass unterschiedliche auf konkrete Anbauteile abgestimmte Adapterstücke an unterschiedlichen Positionen anordnenbar sind, so dass die Adapterstücke Anbindungspunkte für das Anbauteil bilden.

Die Profile sind für unterschiedliche Typen von Anbauteilen universell einsetzbar. Das bedeutet, dass lediglich nur eine Sorte von Profilen gefertigt und auf Lager gehalten werden muss. Das ermöglicht Einsparung von finanziellen Aufwendungen und Lagerplatz. Zudem wird die Montage erleichtert, da nur noch eine Art von Profil am Aufbau angebracht werden muss.

Für jedes Anbauteil sind jeweils passend angefertigte Adapterstücke vorgesehen, die an oder in dem Profil angebracht werden. Das Profil sieht entsprechende Verbindungsmöglichkeiten für die unterschiedlichen Adapterstücke vor. Das bedeutet, dass am fertig montierten Profil lediglich die passenden Adapterstücke an den für das jeweilige Anbauteil vorgesehenen Positionen angebracht werden müssen. Die Adapterstücke sind so ausgestaltet, dass sie sowohl an oder in dem Profil befestigt werden können als auch Anbindungsmöglichkeiten für das jeweilige Anbauteil vorsehen, mithin Anbindungspunkte für diese bilden. Neben der vereinfachten Montage hat das den zusätzlichen Vorteil, dass bei geänderten Einsatzbedürfnissen auch der Wechsel von einem Anbauteil zu einem anderen Anbauteil sehr einfach möglich ist. Es sind lediglich die Adapterstücke auszutauschen, so dass ein Aufbau eines Abfallsammelfahrzeuges problemlos mit verschiedenen Anbauteilen kombiniert und entsprechend umgerüstet werden kann.

Profil und Adapterstücke werden bevorzugt aus einem metallischen Material, beispielsweise Stahl oder Aluminium gefertigt.

Vorzugsweise ist das Profil ein zumindest abschnittsweise geschlossenes Profil. Das Profil ist dadurch sehr stabil bei minimiertem Gewicht. Besonders bevorzugt weist das Profil einen im Wesentlichen rechteckigen Querschnitt auf. In Abschnitten, wo das Profil nicht geschlossen ist, weist es vorzugsweise einen C-förmigen Querschnitt auf.

In einer bevorzugten Ausgestaltung der Erfindung weist das Profil eine erste Wand auf, die mit dem Aufbau eines Abfallsammelfahrzeugs in Anlage bringbar ist. Das Profil wird vorzugsweise vollflächig mit dem Aufbau in Anlage gebracht. Bevorzugt wird das Profil stoffschlüssig, besonders bevorzugt schweißtechnisch, mit dem Aufbau verbunden. Dadurch ist es möglich, dass eine stabile und dauerhaft haltbare Verbindung zwischen dem Profil und dem Aufbau entsteht.

Eine weitere bevorzugte Ausgestaltung der Erfindung sieht vor, dass das Profil eine zweite Wand aufweist, die mit einem Anbauteil eines Abfallsammelfahrzeugs in Anlage bringbar ist und in der zweite Öffnungen zum Fixieren des Anbauteils vorgesehen sind. Auch hier kommt das Profil vorzugsweise vollflächig mit dem Anbauteil in Anlage.

Vorzugsweise weist das Profil einen Innenraum auf, in den das zumindest eine Adapterstück einbringbar ist. Durch die Positionierung des Adapterstücks im Innenraum des Profils ist es vor Verschmutzung weitgehend geschützt, was Korrosion verhindert. Zudem wird der Bauraum optimal ausgenutzt.

In einer bevorzugten Ausführung der Erfindung weist das Profil in einer dritten Wand zumindest eine Öffnung zum Einbringen und Fixieren eines Adapterstücks auf. Die Öffnung befindet sich vorzugsweise an einer Stelle in dem Profil, wo das Adapterstück einen Anbindungspunkt für das Anbauteil bilden soll. Dadurch ist es in einfacher Weise an seiner vorgesehenen Position zu befestigen.

In einer weiteren bevorzugten Ausgestaltung der Erfindung weist das Profil in einer seiner Wände Durchbrüche zum Einbringen von Werkzeugen oder für Montagezwecke auf. Die Durchbrüche das Anbringen von weiteren Komponenten an oder in dem Profil. Insbesondere können Durchbrüche vorgesehen sein, um einen Lackierkopf in das Profil einzubringen und in dem Profil zu führen, um die Innenoberfläche des Profils zu lackieren.

Eine weitere Ausführungsform der Erfindung sieht vor, die zumindest eine Öffnung einen ersten Abschnitt aufweist, der als Langloch ausgestaltet ist, das sich in Längsrichtung des Profils erstreckt, und einen zweiten Abschnitt aufweist, der als Einführöffnung ausgestaltet ist. Der zweite Abschnitt ist von seiner Geometrie her so gestaltet, dass das Adapterstück oder ein Teil davon hindurch in den Innenraum des Profils geführt werden kann. Die Ausdehnung des zweiten Abschnitts in Querrichtung des Profils ist breiter als die entsprechende Ausdehnung des Langlochs des ersten Abschnitts. So kann das Adapterstück oder ein Teil davon innerhalb des Profils entlang des Langlochs geführt und gleichzeitig darin gehalten werden.

Bevorzugt umfasst das Adapterstück ein Tragelement mit zumindest einem Loch, das von einer Schraube durchgriffen ist, sowie eine Fixiermutter, die an der Schraube angeordnet ist. Das Tragelement dient dazu, ein Anbauteil daran zu befestigen und kann dementsprechend variabel ausgestaltet sein. Insbesondere weist das Tragelement eine Lagerbolzenaufnahme oder eine Scharnierbolzenaufnahme auf. Die Fixiermutter dient dazu, das Tragelement an seiner vorgesehenen Position unverlierbar festzulegen. Die schraubtechnische Befestigung des Adapterstücks kann mit herkömmlichen Werkzeugen erfolgen und durch die Lösbarkeit der Schraubung ist auch ein einfacher Austausch bei Beschädigungen möglich.

In einer weiteren vorteilhaften Ausgestaltung der Erfindung ist in Einbaulage das Adapterstück an dem Profil fixiert ist, indem die Wand des Profils zwischen dem Tragelement und der Fixiermutter eingeklemmt ist. Dabei wird die Fixiermutter durch eine Öffnung in das Profil eingeführt und die Wand des Profils zwischen das Tragelement und die Fixiermutter gebracht. Dann wird die Schraube festgezogen, so dass das Adapterstück an dem Profil festgeklemmt wird.

Bevorzugt ist der zweite Abschnitt der Öffnung so ausgestaltet, dass eine Fixiermutter eingeführt werden kann. Besonders bevorzugt ist die Öffnung so ausgestaltet, dass eine Fixiermutter in einer bestimmten Ausrichtung in diese eingeführt werden kann. Die Fixiermutter befindet sich im Innenraum des Profils und ist über die Schraube mit dem Tragelement außerhalb des Profils verbunden.

Das Adapterstück kann entlang des zweiten Abschnitts der Öffnung geführt werden. Dabei gleitet die Schraube entlang des Langlochs. Da das Langloch schmaler ist als der zweite Abschnitt wird die Fixiermutter innerhalb des Profils gehalten, da ein Hinterschnitt gebildet wird, indem die Wand des Profils zwischen der Fixiermutter und dem Tragelement angeordnet ist.

Bevorzugt dient das in Einbaulage untere Ende des ersten Abschnitts der Öffnung als Anschlag für eine Schraube einer Fixiermutter. In Einbaulage ist die Öffnung so ausgerichtet, dass sich der zweite Abschnitt am oberen Ende der Öffnung befindet. Dort wird die Fixiermutter in des Profil eingebracht und das Adapterstück nach unten geführt, bis die Schraube in Anlage mit dem unteren Ende des ersten Abschnitts gelangt. Der erste Abschnitt ist dabei so dimensioniert, dass das Adapterstück an seiner vorgesehenen Position zur Ruhe kommt. Es muss also beim Fixieren nicht zusätzlich festgehalten werden, was die Montage sehr erleichtert.

In einer weiteren vorteilhaften Ausgestaltung der Erfindung ist eine Länge L der Fixiermutter an die Breite B des Profils angepasst, so dass sie in Einbaulage zwischen zwei gegenüberliegenden Wänden des Profils eingeklemmt ist. Wenn die Schraube festgezogen wird, dreht sich die Fixiermutter mit und kommt schließlich mit zwei in Breitenrichtung gegenüberliegenden Wänden in Anlage und wird dazwischen eingeklemmt. Die Fixiermutter wird sozusagen automatisch innerhalb des Profils festgehalten, ohne dass dazu ein zusätzliches Werkzeug oder eine Eingriffsöffnung notwendig ist, so dass das Adapterstück an den Profil festgeschraubt werden kann.

Weiterhin bevorzugt ist Fixiermutter im Wesentlichen als rechteckige Platte ausgestaltet, wobei zwei diagonal gegenüberliegende Ecken abgeschrägt sind. Wenn die Schraube festgezogen wird, dreht sich zunächst die Fixiermutter mit. Sind mehrere Fixiermuttern vorgesehen, muss sichergestellt sein, dass sich diese nicht gegenseitig blockieren. Gleichzeitig ist es vorteilhaft, die Fixiermuttern so nahe wie möglich zueinander anzuordnen, um Platz zu sparen. Indem man zwei diagonal gegenüberliegende Ecken abschrägt, können die Fixiermuttern näher zueinander angeordnet werden. Beim Einklemmen der Fixiermuttern zwischen den Wänden ist je nach Ausgangslage höchstens eine halbe Umdrehung notwendig. Es muss lediglich dafür gesorgt sein, dass jede Fixiermutter diese halbe Umdrehung gegenüber den anderen Fixiermuttern vollziehen kann. Daher ist es auch ausreichend, wenn nur zwei der Ecken des Rechtecks abgeschrägt sind.

Beim Einführen der Fixiermutter ist diese vorzugsweise hochkant gestellt, das heißt mit ihrer langen Seite in Fahrzeughochrichtung ausgerichtet. Beim Festziehen der Schraube wird die Fixiermutter gedreht, so dass sie mit ihrer langen Seite im Wesentlichen quer zu der Öffnung steht und damit weder in dem ersten noch in dem zweiten Abschnitt durch die Öffnung passt.

In einer weiteren bevorzugten Ausführung der Erfindung sind die Kanten einer Deckfläche der Fixiermutter zumindest abschnittsweise gefast. Die Fixiermutter kommt beim Festziehen der Schraube mit einer Innenwand des Profils in Anlage. Die Innenkanten des Profils weisen keinen rechten Winkel, sondern einen Radius auf. Durch die Fase an den Kanten der in Anlage kommenden Deckfläche ist sichergestellt, dass die Kanten besser in die Innenkanten des Profils eingepasst sind, so dass die Deckfläche möglichst vollflächig mit der Innenwand in Anlage kommt.

In einer weiteren bevorzugten Ausführung der Erfindung weisen die Profile weitere Öffnungen, insbesondere in der ersten und/oder zweiten und/oder dritten Wand, zum Anbringen weiterer Komponenten auf. Damit werden die Profile vorteilhafterweise dazu genutzt, weitere Komponenten am Aufbau des Abfallsammelfahrzeugs anzubringen. Dabei kann es sich um weitere Aufbauträger handeln, aber auch um Beleuchtungskörper, Überwachungseinrichtungen, Bedienelemente und dergleichen.

Die Erfindung betrifft weiterhin ein Abfallsammelfahrzeug mit einem vorstehend beschriebenen Fixierungssystem. Ein solches Abfallsammelfahrzeug ist vorteilhaft ausgestaltet hinsichtlich Montage, Wartung und Umrüstbarkeit. Auf Details wird zur Vermeidung von Wiederholungen auf das Vorstehende verwiesen.

Vorzugsweise ist an dem Abfallsammelfahrzeug am heckseitigen Aufbau rechtsseitig und linksseitig je ein Profil angeordnet, vorzugsweise stoffschlüssig verbunden, besonders bevorzugt angeschweißt. Damit werden die Anbindungspunkte für ein Anbauteil bereitgestellt, so dass eine herkömmliche Montage des Anbauteils möglich ist.

Die Erfindung betrifft außerdem ein Verfahren zum Montieren eines Fixierungssystems, insbesondere einem Fixierungssystem wie vorstehend beschrieben, mit einem Profil mit zumindest einer Öffnung, die einen ersten Abschnitt aufweist, der als Langloch ausgestaltet ist, das sich in Längsrichtung des Profils erstreckt, und die einen zweiten Abschnitt aufweist, der als Einführöffnung ausgestaltet ist, sowie mit einem Adapterstück mit einem Tragelement mit zumindest einem Loch, das von einer Schraube durchgriffen ist, sowie einer Fixiermutter, die an der Schraube angeordnet ist, umfassend folgende Schritte:
- Bereitstellen eines Profils,
- Einbringen der Fixiermutter in die Einführöffnung,
- Führen des Adapterstücks entlang der Öffnung in eine Endposition,
- Fixieren des Adapterstücks, indem die Fixiermutter durch Drehen der Schraube zwischen zwei Wänden des Profils verklemmt wird und indem durch weiteres Drehen der Schraube die Wand des Profils zwischen dem Tragelement und der Fixiermutter eingeklemmt wird,
- Optional Wiederholen der vorstehenden Schritte an einer weiteren Öffnung.

Auf die vorstehenden Ausführungen zu dem Fixiersystem wird Bezug genommen.

Das Profil sowie die Adapterstücke sind aus einem metallischen Material gefertigt. Sie werden mit einer oder mehreren Öffnungen versehen, je nachdem wie viele Adapterstücke vorgesehen sein können. Da es als vorteilhaft angesehen wird, dass für alle Varianten von Anbauteilen identische Profile verwendet werden. Es ist also zweckmäßig so viele Anbindungspunkte und damit Öffnungen vorzusehen, der der Maximalzahl der vorgesehenen Anbindungspunkte entspricht.

Je nach Anbindungspunkt kann das Tragelement des Adapterstücks unterschiedlich ausgestaltet sein. Die Vorgehensweise bei der Montage ist allerdings immer identisch.

Zunächst wird die Fixiermutter im Bereich des zweiten Abschnitts der Öffnung in den Innenraum des Profils eingeführt. Das Tragelement befindet sich außerhalb des Profils, die Schraube durchgreift die Öffnung. Danach wird das Adapterstück entlang der Öffnung geführt, bis die vorgesehene Endposition erreicht wird. Die Schraube gleitet dabei in dem Langloch.

Durch Drehen der Schraube werden Tragelement und Fixiermutter gegeneinander verschraubt und dabei die Wand des Profils dazwischen eingeklemmt. Dadurch entsteht eine reversible Klemmverbindung, die für Wartungszwecke oder zum Austausch des Anbauteils auch wieder einfach zu lösen ist. Die Fixiermutter wird dabei zwischen zwei Wänden der Profils verklemmt, so dass das Festschrauben des Adapterstücks damit ohne zusätzliche Werkzeuge zum Halten der Fixiermutter erfolgen kann.

Vorzugsweise wird dabei die Fixiermutter zunächst mit der Schraube mitgedreht, bis sie mit gegenüberliegenden Enden mit zwei ebenfalls im Wesentlichen gegenüberliegenden Wänden der Profils in Anlage kommt und ihre Bewegung dadurch blockiert wird.

Wenn mehrere Adapterstücke angebracht werden sollen, werden die vorstehenden Schritte an einer weiteren Öffnung wiederholt.

Ein weiterer vorteilhafter Verfahrensschritt beinhaltet, dass das Adapterstück bis zum als Anschlag wirkenden Ende des Langlochs geführt wird. Die Schraube gleitet dabei in dem Langloch, bis sie mit dessen Ende in Anlage kommt. Sind in dem Adapterelement mehrere Fixiermuttern vorgesehen, dann werden diese nacheinander in das Profil eingeführt und nur die erste Schraube kommt mit dem Ende des Langlochs in Anlage. Durch das Vorsehen dieses Anschlags kann das Adapterstück genau an der vorgesehenen Stelle positioniert werden. Üblicherweise befindet sich der zweite Abschnitt der Öffnung in Einbaulage oben, so dass das Adapterstück nach unten geführt wird und nach Erreichen des Anschlags durch die Schwerkraft dort gehalten wird, was die Montage vereinfacht.

Vorzugsweise wird in einem weiteren Verfahrensschritt das Profil mit einem Aufbau eines Abfallsammelfahrzeugs stoffschlüssig verbunden, bevorzugt angeschweißt. Damit wird eine dauerhaft haltbare und stabile Verbindung zwischen den Profil hergestellt.

Nachfolgend wird ein Anbauteil befestigt.

Weitere Merkmale der Erfindung ergeben sich aus den nachfolgenden Zeichnungen und der zugehörigen Beschreibung.

Es zeigen:
- Figur 1 a,b: Ein Profil in verschiedenen Perspektiven,
- Figur 2: einen Aufbau eines Abfallsammelfahrzeugs mit einem erfindungsgemäßen Fixierungssystems in einer ersten Perspektive,
- Figur 3: einen Aufbau eines Abfallsammelfahrzeugs mit einem erfindungsgemäßen Fixierungssystems in einer zweiten Perspektive,
- Figur 4: ein erstes Profil des Aufbaus mit Adapterstücken,
- Figur 5: ein zweites Profil des Aufbaus mit Adapterstücken,
- Figur 6 a,b,c: ein Adapterstück in einer ersten Ausgestaltung,
- Figur 7 a,b: eine Fixiermutter,
- Figur 8 a,b,c: ein Adapterstück in einer zweiten Ausgestaltung,
- Figur 9 a,b,c: ein Adapterstück in einer dritten Ausgestaltung,
- Figur 10 a,b,c: ein Adapterstück in einer vierten Ausgestaltung,
- Figur 11 a,b,c: das Einbringen und Fixieren eines Adapterstücks in ein Profil.

Die hier vorgestellten Ausführungsbeispiele beziehen sich auf sogenannte Hecklader, also Abfallsammelfahrzeuge, die am Aufbau 1 eine heckseitige Einfüllöffnung mit entsprechenden Lifter-Systemen aufweisen. Die Erfindung ist aber nicht darauf beschränkt. Das erfindungsgemäße Fixierungssystem kann auch bei anderen Ausführungsvarianten von Abfallsammelfahrzeugen zum Einsatz kommen.

Die Erfindung zeichnet sich dadurch aus, dass unterschiedlichste Anbauteile an ein und demselben Aufbau 1 montiert werden können, ohne dafür individuelle Anbindungspunkte vorsehen zu müssen. Dabei kommt ein Fixierungssystem zum Einsatz, das Profile 2 und Adapterstücke 3 umfasst. Die Profile 2 sind derart ausgebildet, dass unterschiedliche auf konkrete Anbauteile abgestimmte Adapterstücke 3 an unterschiedlichen Positionen anordnenbar sind, so dass die Adapterstücke 3 Anbindungspunkte für das Anbauteil bilden.

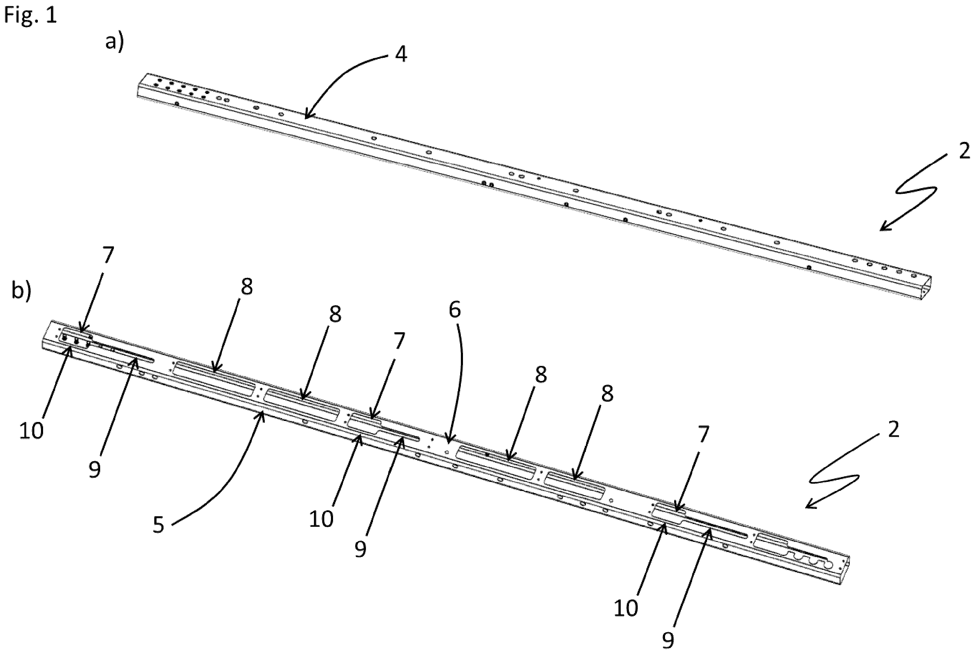

Das in Figur 1a,b in verschiedenen Perspektiven dargestellte Profil 2 hat einen rechteckigen Querschnitt und ist abschnittsweise geschlossen.

Es weist eine erste Wand 4 auf die mit dem Aufbau 1 eines Abfallsammelfahrzeugs in Anlage bringbar ist. Das Profil 2 ist in dem hiesigen Ausführungsbeispiel vollflächig in Anlage mit dem Aufbau 1 und schweißtechnisch daran festgelegt. Dadurch erhält man eine stabile, dauerfeste Verbindung.

Das Profil 2 weist weiterhin eine zweite Wand 5 auf die mit einem Anbauteil eines Abfallsammelfahrzeugs in Anlage bringbar ist.

Das Profil 2 weist außerdem eine dritte Wand 6 mit Öffnungen 7 zum Einbringen und Fixieren eines Adapterstücks 3 auf. Außerdem sind Durchbrüche 8 zum Einbringen von Werkzeugen oder für Montagezwecke vorgesehen.

Die Öffnungen 7 zum Einbringen und Fixieren eines Adapterstücks 3 weisen einen ersten Abschnitt 9 auf, der als Langloch ausgestaltet ist, und einen zweiten Abschnitt 10, der als Einführöffnung ausgestaltet ist.

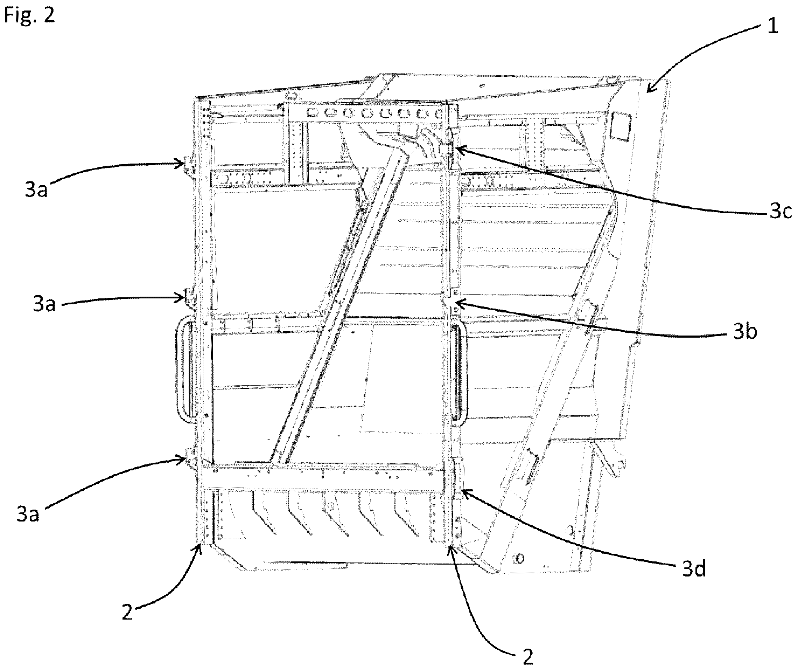

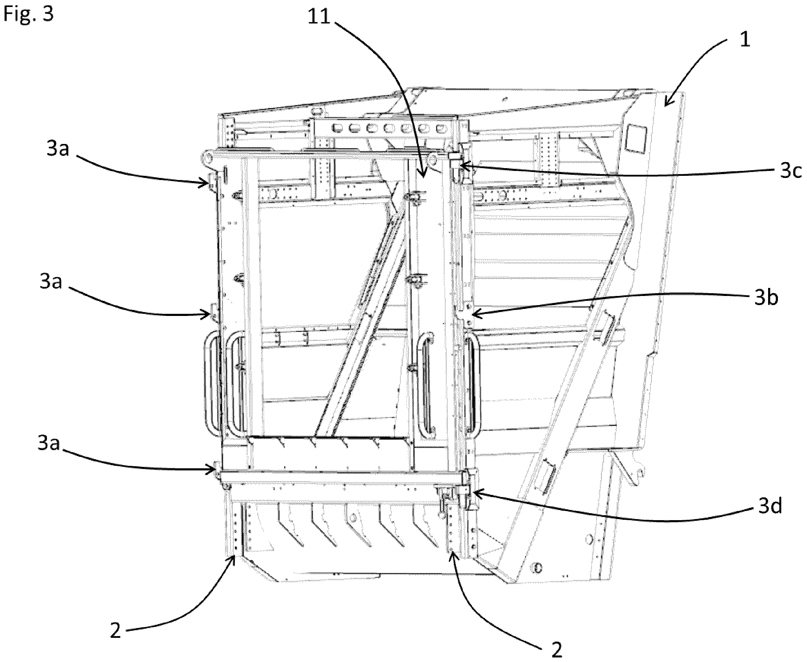

Die Figuren 2 und 3 zeigen das heckseitige Ende eines Aufbaus 1 eines Abfallsammelfahrzeugs. Rechts- und linksseitig ist an dem Aufbau 1 jeweils ein Profil 2 schweißtechnisch angeordnet. Insgesamt sind sechs Adapterstücke 3a-3d an unterschiedlichen Positionen an den Profilen 2 angeordnet und bilden somit sechs Anbindungspunkte für das Anbauteil 11, das hier als Hecktür ausgebildet ist. Figur 2 zeigt den Aufbau 1 ohne das Anbauteil 11. In Figur 3 ist das Anbauteil 11 an dem Aufbau 1 angeordnet.

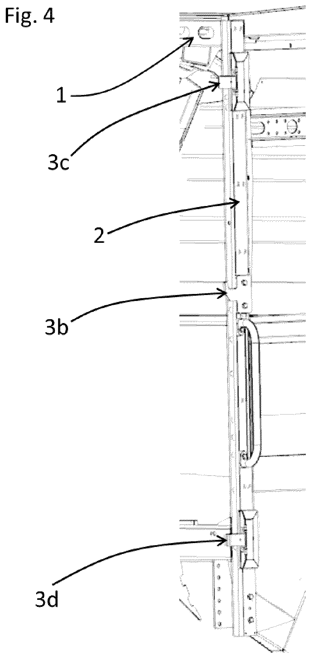

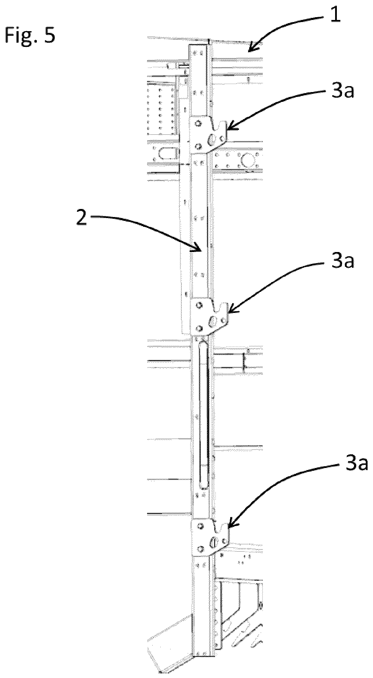

In den Figuren 4 und 5 sind die Profile 2 mit den Adapterstücken 3 jeweils detaillierter dargestellt. Die Adapterstücke 3a dienen der Aufnahme eines Lagerbolzens, ebenso wie das Adapterstück 3b. Das Adapterstück 3c und das Adapterstück 3d dienen der Aufnahme eines Scharnierbolzens, mit dem sie zusammen ein Scharnier bilden, an dem die Hecktür 11 geschwenkt werden kann.

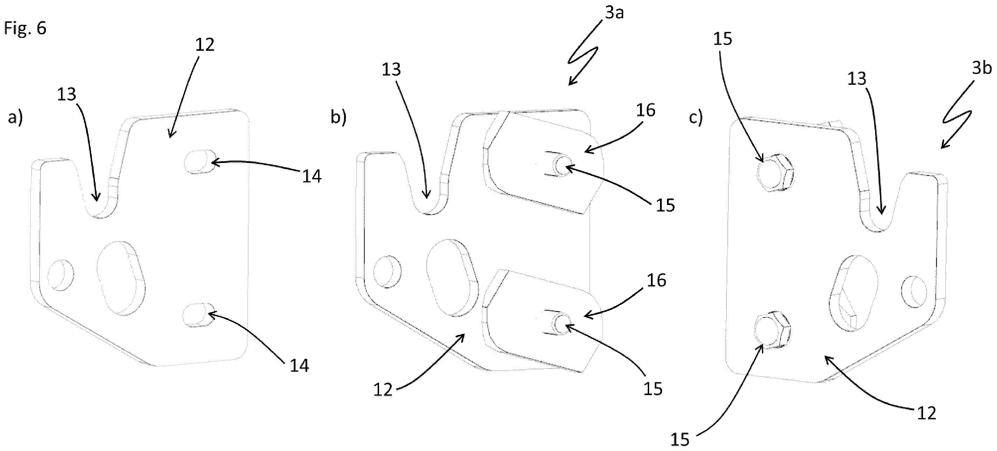

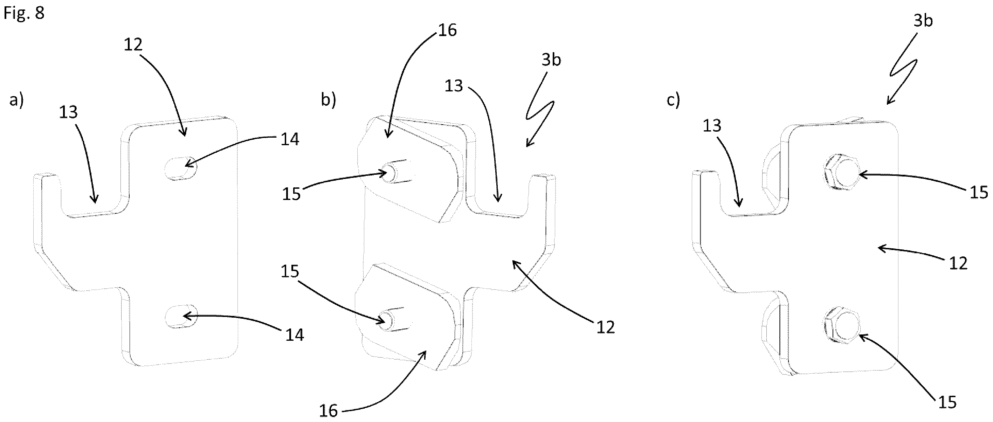

Die unterschiedlichen Adapterstücke 3a,3b,3c,3d sind in den Figuren 6, 8, 9 und 10 genauer dargestellt. Sie unterscheiden sich um Wesentlichen in der Ausgestaltung des jeweiligen Tragelements 12. Die Erläuterungen zu Figur 6 gelten in analoger Form für die Adapterstücke 3b,3c,3d in den Figuren 8, 9 und 10. Identische Merkmale sind dabei mit identischen Bezugszeichen versehen.

Das in Figur 6a bis 6b gezeigte Adapterstück 3a dient der Aufnahme eines Lagerbolzens. Daher weist das Tragelement 12 eine Lagerbolzenaufnahme 13 auf, in der der Lagerbolzen ruhen kann. Das Tragelement 12 weist zwei Löcher 14 auf, die jeweils von einer Schraube 15 durchgriffen sind. An den Schrauben 15 ist jeweils eine Fixiermutter 16 angeordnet. Die Fixiermuttern 16 verfügen dazu über einen Durchbruch, der mit einem Gewinde versehen ist.

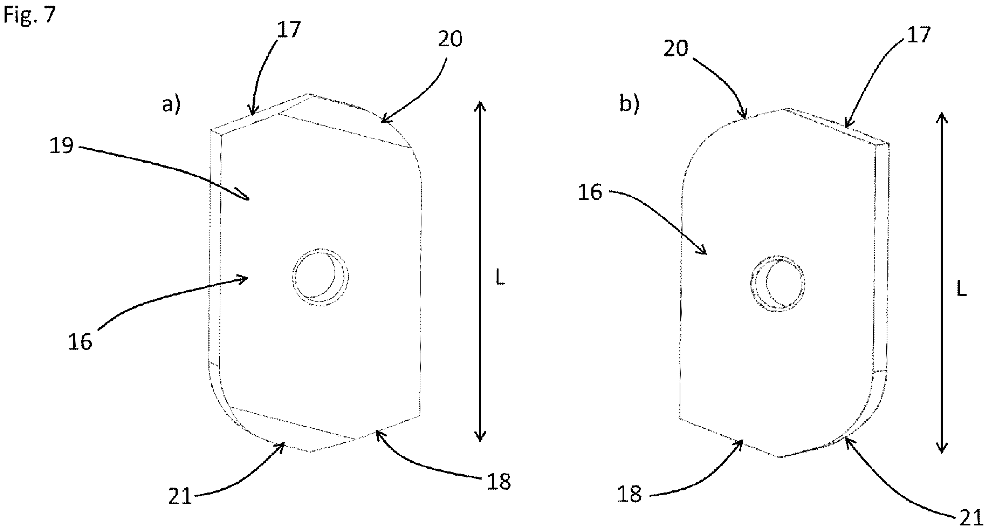

Eine Fixiermutter 16 ist in den Figuren 7a und 7b gezeigt. Die Fixiermutter 16 ist als im Wesentlichen rechteckige Platte ausgestaltet. Die Länge L der Fixiermutter 16 ist auf die Breite B des Profils 2 angepasst, damit die Fixiermuttern 16 zwischen zwei gegenüberliegenden Wänden des Profils 2 eingeklemmt werden kann, wie weiter untern noch gezeigt wird. Zwei diagonal gegenüberliegende Ecken 17,18 sind abgeschrägt. Wie aus den Figuren 6, 8, 9 und 10 ersichtlich ist, sind an jedem Tragelement 12 zwei oder drei Fixiermuttern 16 vorgesehen, die sich jeweils über die Schrauben 15 drehen lassen. Um einzelnen Fixiermuttern 16 eine freie Drehung zu erlauben und gleichzeitig die Fixiermuttern 16 so nahe wie möglich aneinander zu positionieren, ist diese Abschrägung vorgesehen.

Eine Deckfläche 19 der Fixiermutter 16 ist im Bereich der anderen beiden Ecken 20,21 gefast. Zudem sind diese Ecken 20,21 abgerundet. Die Innenkanten des Profils 2 weisen keinen rechten Winkel, sondern einen Radius auf. Durch die Fase an den Ecken 20,21 der in Anlage kommenden Deckfläche 19 ist sichergestellt, dass die Deckfläche 19 möglichst vollflächig mit der Innenwand des Profils 2 in Anlage kommt.

Auch die Figur 8 zeigt ein Adapterstück 3b, das ebenfalls mit einer Lagerbolzenaufnahme 13 ausgestattet ist.

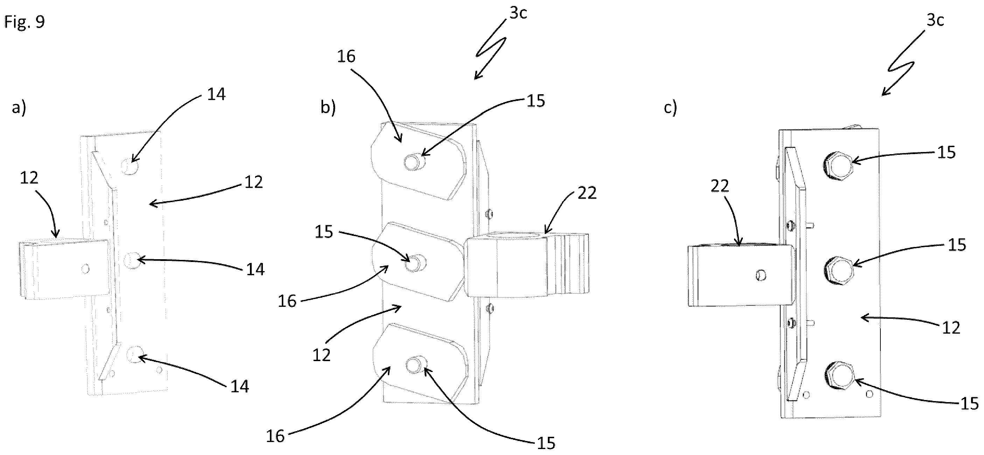

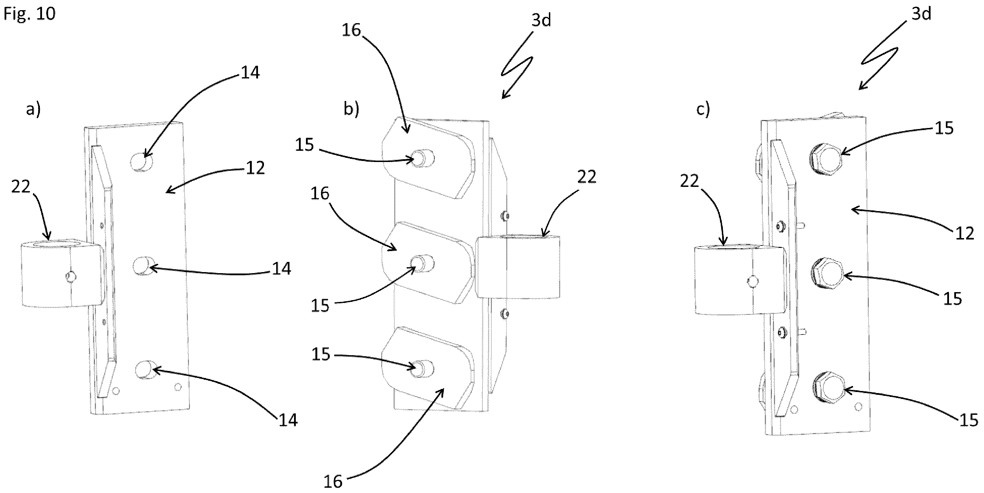

In den Figuren 9 und 10 sind Adapterstücke 3c,3d dargestellt, deren Tragelemente 12 jeweils eine Scharnierbolzenaufnahme 22 aufweisen. Im Gegensatz zu den vorstehend beschriebenen Ausgestaltungen sind diese Adapterstücke 3c,3d mit drei Fixiermuttern 16 ausgestattet.

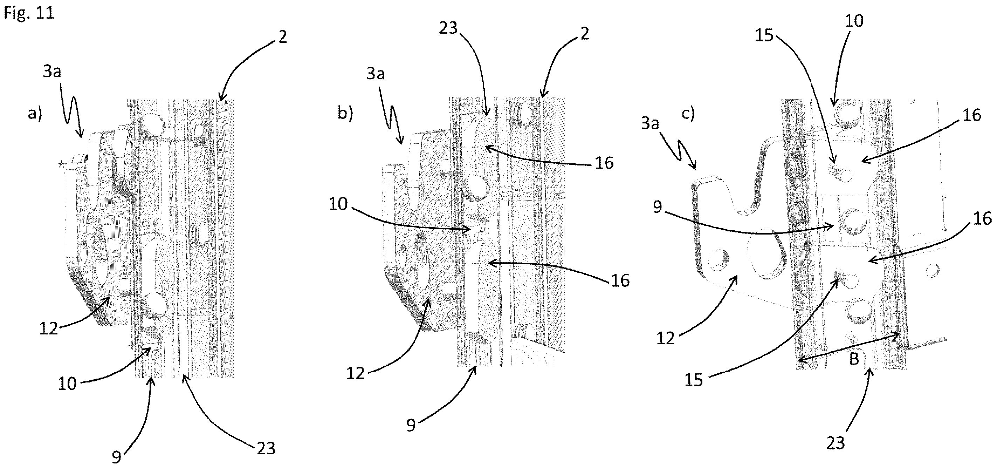

Das Anbringen eines Adapterstücks 3a wird exemplarisch in Figur 11a bis 11c dargestellt. Dieses Prinzip gilt analog für alle anderen Arten von Adapterstücken 3.

Die in Einbaulage unterste Fixiermutter 16 wird hochkant stehend in den zweiten Abschnitt 10 einer Öffnung 7 in den Innenraum 23 des Profils 2 eingebracht (Figur 11a). Die Öffnung 7 ist dort so dimensioniert, dass die Fixiermutter 16 gerade durch die Öffnung 7 passt, damit das Profil 2 nicht unnötig an Stabilität verliert. Da Adapterstück 3a wird entlang des ersten Abschnitts 9 der Öffnung 7 geführt, bis die sich die nachfolgende Fixiermutter 16 vor dem zweiten Abschnitt 10 befindet, wobei die Schraube 15 die Öffnung 7 durchgreift und entlang des als Langloch ausgeführten ersten Abschnitts 9 gleitet. Das Tragelement 12 befindet sich dabei außerhalb des Profils.

Danach wird die zweite Fixiermutter 16 in den Innenraum 23 gebracht und das Adapterstück 3a weiter entlang der Öffnung 7 geführt (Figur 11b). Das wiederholt sich, bis sich alle Fixiermuttern 16 im Innenraum 23 befinden. Dann wird das Adapterstück 3a entlang der Öffnung geführt, die zuerst eingeführte Schraube 15 mit dem unteren Ende des ersten Abschnitts 9 in Anlage kommt. Damit ist automatisch die vorgesehene Endposition des Adapterstücks 3a erreicht und es kann nun fixiert werden. Durch diese Ausgestaltung muss das Adapterstück 3a nicht aufwändig an seiner vorgesehenen Position gehalten werden, was die Montage vereinfacht.

Durch Drehen der Schrauben 15 werden Tragelement 12 und Fixiermuttern 16 gegeneinander verschraubt und dabei die dritte Wand 6 des Profils 2 dazwischen eingeklemmt. Die Fixiermuttern 16 drehen sich zunächst mit den Schrauben 15 mit bis sie gegen die Wände des Profils 2 stoßen. Da die Länge L der Fixiermuttern 16 auf die Breite B des Profils 2 angepasst ist - konkret ist die Länge L etwas größer als die Breite B -, verklemmen sich die Fixiermuttern 16 zwischen gegenüberliegenden Wänden des Profils (Figur 11c), so dass sie gegenüber der Drehung der Schrauben 15 festgehalten sind und die Schrauben 15 gegen die Fixiermuttern 16 festgezogen werden. Dafür sind vorteilhafterweise keine weiteren Werkzeuge notwendig.

In analoger Weise werden die übrigen Adapterstücke 3b,3c,3d an den zugehörigen Öffnungen 7 angeordnet und dann die Hecktür 11 an dem Aufbau 1 montiert.

Das erfindungsgemäße Fixierungssystem zeichnet sich nicht nur dadurch aus, dass die Montage unterschiedlicher Anbauteile an identisch ausgestalteten Aufbauten auf einfache Weise ermöglicht wird. Gleichzeitig wird auch der Aufwand für die Lagerung und Logistik reduziert. Außerdem wird eine Umrüstbarkeit eines Abfallsammelfahrzeugs ermöglicht, indem lediglich die Adapterstücke 3 ausgetauscht werden müssen.

### Bezugszeichen

- 1: Aufbau
- 2: Profil
- 3,3a,3b,3c,3d: Adapterstück
- 4: erste Wand von 2
- 5: zweite Wand von 2
- 6: dritte Wand von 2
- 7: Öffnung
- 8: Durchbruch
- 9: erster Abschnitt von 7
- 10: zweiter Abschnitt von 7
- 11: Anbauteil/Hecktür
- 12: Tragelement
- 13: Lagerbolzenaufnahme
- 14: Loch
- 15: Schraube
- 16: Fixiermutter
- 17: Ecke von 16
- 18: Ecke von 16
- 19: Deckfläche von 16
- 20: Ecke von 16
- 21: Ecke von 16
- 22: Scharnierbolzenaufnahme
- 23: Innenraum von 2
- B: Breite von 2
- L: Länge von 16

## Patentansprüche

1. Fixierungssystem für ein Abfallsammelfahrzeug umfassend zumindest ein Profil (2) und zumindest ein Adapterstück (3,3a,3b,3c,3d), das an oder in dem Profil (2) anordnenbar ist, wobei Profil (2) und Adapterstück (3,3a,3b,3c,3d) dazu eingerichtet sind, um an einem Aufbau (1) eines Abfallsammelfahrzeugs abgeordnet zu werden und die Anbringung eines Anbauteils (11) an dem Aufbau (1) zu ermöglichen,
wobei das Profil (2) so ausgebildet ist, dass unterschiedliche auf konkrete Anbauteile (11) abgestimmte Adapterstücke (3,3a,3b,3c,3d) an unterschiedlichen Positionen anordnenbar sind, so dass die Adapterstücke (3,3a,3b,3c,3d) Anbindungspunkte für das Anbauteil (11) bilden.

2. Fixierungssystem nach Anspruch 1 **dadurch gekennzeichnet, dass** das Profil (2) eine erste Wand (4) aufweist, die mit dem Aufbau (1) eines Abfallsammelfahrzeugs in Anlage bringbar ist.

3. Fixierungssystem nach Anspruch 1 oder 2 **dadurch gekennzeichnet, dass** das Profil (2) eine zweite Wand (5) aufweist, die mit einem Anbauteil (11) eines Abfallsammelfahrzeugs in Anlage bringbar ist.

4. Fixierungssystem nach zumindest einem der vorstehenden Ansprüche **dadurch gekennzeichnet, dass** das Profil (2) einen Innenraum (23) aufweist, in den das zumindest eine Adapterstück (3,3a,3b,3c,3d) einbringbar ist.

5. Fixierungssystem nach zumindest einem der vorstehenden Ansprüche **dadurch gekennzeichnet, dass** das Profil (2) in einer dritten Wand (6) zumindest eine Öffnung (7) zum Einbringen und Fixieren eines Adapterstücks (3,3a,3b,3c,3d) aufweist.

6. Fixierungssystem nach Anspruch 5 **dadurch gekennzeichnet, dass** die zumindest eine Öffnung (7) einen ersten Abschnitt (9) aufweist, der als Langloch ausgestaltet ist, das sich in Längsrichtung des Profils (2) erstreckt, und einen zweiten Abschnitt (10) aufweist, der als Einführöffnung ausgestaltet ist.

7. Fixierungssystem nach zumindest einem der vorstehenden Ansprüche **dadurch gekennzeichnet, dass** das Adapterstück (3,3a,3b,3c,3d) ein Tragelement (12) mit zumindest einem Loch (14), das von einer Schraube (15) durchgriffen ist, sowie eine Fixiermutter (16), die an der Schraube (15) angeordnet ist, umfasst.

8. Fixierungssystem nach Anspruch 7 **dadurch gekennzeichnet, dass** in Einbaulage das Adapterstück (3,3a,3b,3c,3d) an dem Profil (2) fixiert ist, indem die Wand des Profils (2) zwischen dem Tragelement (12) und der Fixiermutter (16) eingeklemmt ist.

9. Fixierungssystem nach zumindest einem der Ansprüche 6 bis 8 **dadurch gekennzeichnet, dass** der zweite Abschnitt der Öffnung (7) so ausgestaltet ist, dass eine Fixiermutter (16) eingeführt werden kann.

10. Fixierungssystem nach zumindest einem der Ansprüche 7 bis 9 **dadurch gekennzeichnet, dass** eine Länge L der Fixiermutter (16) an die Breite B des Profils (2) angepasst ist, so dass sie in Einbaulage zwischen zwei gegenüberliegenden Wänden des Profils (2) eingeklemmt ist.

11. Fixierungssystem nach zumindest einem der Ansprüche 7 bis 10 **dadurch gekennzeichnet, dass** die Fixiermutter (16) im Wesentlichen als rechteckige Platte ausgestaltet ist, wobei zwei diagonal gegenüberliegende Ecken (17,18) abgeschrägt sind.

12. Fixierungssystem nach zumindest einem der Ansprüche 7 bis 11 **dadurch gekennzeichnet, dass** die Kanten einer Deckfläche (19) der Fixiermutter (16) zumindest abschnittsweise gefast sind.

13. Abfallsammelfahrzeug mit einem Fixierungssystem nach zumindest einem der
vorstehenden Ansprüche.

14. Abfallsammelfahrzeug nach Anspruch 13 **dadurch gekennzeichnet, dass** am heckseitigen Aufbau (1) rechtsseitig und linksseitig je ein Profil (2) angeordnet, vorzugsweise stoffschlüssig verbunden, ist.

15. Verfahren zum Montieren eines Fixierungssystems, insbesondere nach zumindest einem der vorstehenden Ansprüche, mit einem Profil (2) mit zumindest einer Öffnung (7), die einen ersten Abschnitt (9) aufweist, der als Langloch ausgestaltet ist, das sich in Längsrichtung des Profils (2) erstreckt, und die einen zweiten Abschnitt (10) aufweist, der als Einführöffnung ausgestaltet ist, sowie mit einem Adapterstück (3,3a,3b,3c,3d) mit einem Tragelement (12) mit zumindest einem Loch (14), das von einer Schraube (15) durchgriffen ist, sowie einer Fixiermutter (16), die an der Schraube (15) angeordnet ist,
umfassend folgende Schritte:
• Bereitstellen eines Profils (2),
• Einbringen der Fixiermutter (16) in die Einführöffnung,
• Führen des Adapterstücks (3,3a,3b,3c,3d) entlang der Öffnung (7) in eine Endposition,
• Fixieren des Adapterstücks (3,3a,3b,3c,3d), indem die Fixiermutter (16) durch Drehen der Schraube (15) zwischen zwei Wänden des Profils (2) verklemmt wird und indem durch weiteres Drehen der Schraube (15) die Wand des Profils (2) zwischen dem Tragelement (12) und der Fixiermutter (16) eingeklemmt wird,
• Optional Wiederholen der vorstehenden Schritte an einer weiteren Öffnung (7).
